Europäisches Patentamt

European Patent Office

Office européen des brevets

(19)

(11) **EP 0 959 581 A2**

(12) **EUROPEAN PATENT APPLICATION**

(43) Date of publication:
24.11.1999 Bulletin 1999/47

(51) Int. Cl.$^6$: **H04L 1/00**

(21) Application number: **99109863.3**

(22) Date of filing: **19.05.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.05.1998 JP 13729698**

(71) Applicant: **NEC CORPORATION**
**Tokyo (JP)**

(72) Inventor: **Takayama, Yoshikazu**
**Minato-ku, Tokyo (JP)**

(74) Representative:
**Glawe, Delfs, Moll & Partner**
**Patentanwälte**
**Postfach 26 01 62**
**80058 München (DE)**

(54) **Radio transmission system and transmission method with unequal error protection**

(57) A radio transmission system transmits/receives information between a transmitter and receiver via a radio channel. The transmitter includes a plurality of power setting units and a transmission unit. The power setting units individually variably set the transmission powers of a plurality of pieces of information to be transmitted to the receiver to predetermined values. The transmission unit simultaneously transmits the plurality of pieces of information having the set transmission powers to the receiver. A radio transmission method is also disclosed.

F I G.2

## Description

### Background of the Invention

The present invention relates to a radio transmission system and, more particularly, to a method for ensuring the error rate in a portable telephone system and the like.

A CODEC in a portable telephone has conventionally had a low bit rate, so the tone quality is degraded by an error and greatly influenced by one bit. However, not all bits equally influence the tone quality.

For this reason, bits are classified into important and unimportant bits, and the important bits are subjected to strong error correction. For example, the speech partner must recognize speech, and thus the upper and lower bits of a speech signal are respectively defined as important and unimportant bits. The important bits are subjected to error correction with many check bits, whereas the unimportant bits transmitted are directly used without adding any check bits.

In a PDC (Personal Digital Cellular), 59 bits of 134-bit information from the coder are directly transmitted as unimportant information. A 7-bit CRC (Cyclic Redundancy Check) is added to 44 bits of the remaining 75-bit information to obtain the most important 51-bit information. The 82 bits (= 75 bits + 7 bits) are transmitted as important information.

In this case, a convolutional code adds to this information 78 check bits and 5 tail bits, resulting in 165 bits (= 82 bits + 78 bits + 5 bits). The resultant information is made from 224 bits (= 59 bits + 165 bits) as a whole, and this 224-bit information is transmitted.

In the conventional portable telephone terminal equipment, the error correction ability is determined by the code and cannot be arbitrarily changed during communication. The optimum reliability changes for important information and unimportant information depending on the communication state, but the error correction ability cannot be set in accordance with the reliability.

### Summary of the Invention

It is an object of the present invention to provide a radio transmission system and transmission method capable of setting a necessary error rate.

It is another object of the present invention to provide a radio transmission system and transmission method capable of minimizing interference with another channel and effectively using the frequency.

To achieve the above objects, according to the present invention, there is provided a radio transmission system for transmitting/receiving information between a transmitter and a receiver via a radio channel, the transmitter comprising a plurality of power setting means for individually variably setting transmission powers of a plurality of pieces of information to be transmitted to the receiver to predetermined values, and transmission means for simultaneously transmitting the plurality of pieces of information having the set transmission powers to the receiver.

### Brief Description of the Drawings

Fig. 1 is a block diagram showing a mobile communication system according to the first embodiment of the present invention;

Fig. 2 is a block diagram showing the transmitter of a mobile station shown in Fig. 1;

Fig. 3 is a block diagram showing a CODEC unit shown in Fig. 2;

Fig. 4 is a block diagram showing the transmitter of a mobile station according to the second embodiment of the present invention;

Fig. 5 is a flow chart showing power setting operation by a power setting controller in Fig. 4;

Fig. 6 is a block diagram showing the multiplexer of a mobile station according to the third embodiment of the present invention;

Fig. 7 is a block diagram showing the multiplexer of a base station according to the third embodiment of the present invention;

Fig. 8 is a flow chart showing control operation by a controller in Fig. 7;

Fig. 9 is a flow chart showing power setting operation by a power setting controller in Fig. 6;

Fig. 10 is a block diagram showing the receiver of a base station according to the fourth embodiment of the present invention;

Fig. 11 is a block diagram showing the transmitter of a mobile station according to the fifth embodiment of the present invention;

Fig. 12 is a flow chart showing power setting operation by a power setting controller in Fig. 11;

Fig. 13 is a block diagram showing the schematic arrangement of a mobile communication system according to the sixth embodiment of the present invention;

Fig. 14 is a block diagram showing a base station shown in Fig. 13; and

Fig. 15 is a block diagram showing a base station switching unit shown in Fig. 13.

### Description of the Preferred Embodiments

The present invention will be described in detail below with reference to the accompanying drawings.

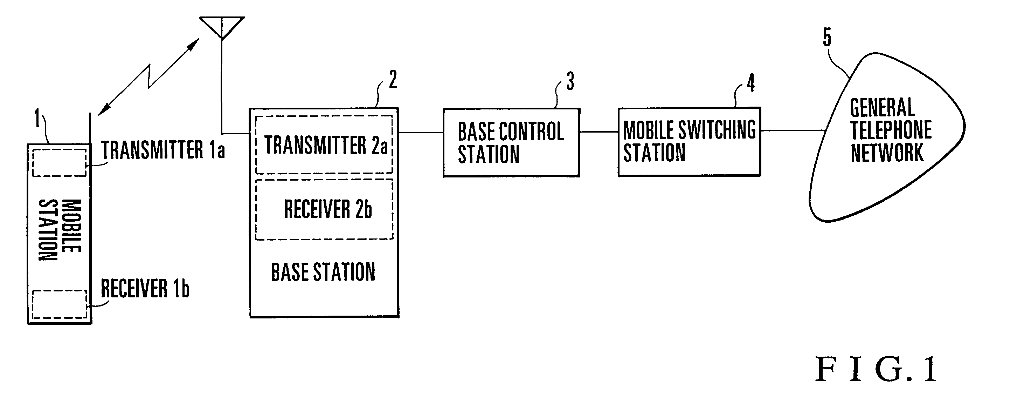

Fig. 1 shows the schematic arrangement of a mobile communication system according to the first embodiment of the present invention. In Fig. 1, the mobile communication system comprises a mobile station 1, a base station 2 for performing radio communication with the mobile station 1, a base control station 3 for controlling the base station 2, a mobile switching station 4 connected to the base control station 3, and a general telephone network 5 connected to the mobile switching station 4.

The mobile station 1 has a transmitter 1a and receiver 1b, and the base station 2 has a transmitter 2a and receiver 2b. The mobile station 1 is connected to the base station 2 via a radio channel, and the base station 2 is connected to the general telephone network 5 via the base control station 3 and mobile switching station 4.

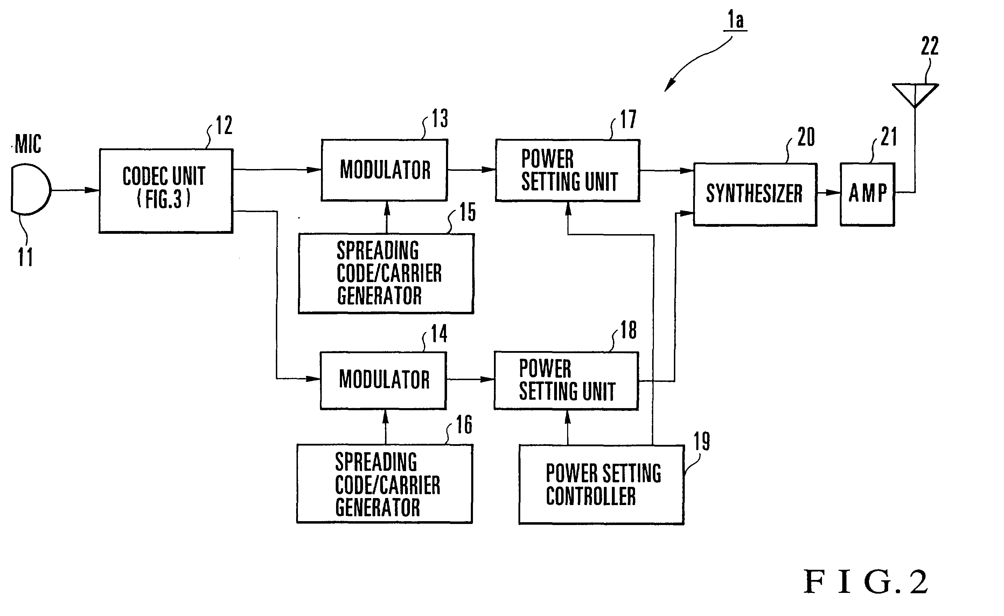

Fig. 2 shows the transmitter 1a of the mobile station 1 shown in Fig. 1. Note that the transmitter 2a of the base station 2 has the same arrangement as shown in Fig. 2.

As shown in Fig. 2, the transmitter 1a comprises a microphone (MIC) 11, a CODEC unit 12 for coding an output from the MIC 11, modulators 13 and 14 for modulating an output from the CODEC unit 12, spreading code/carrier generators 15 and 16 for respectively outputting spreading codes and carriers to the modulators 13 and 14, power setting units 17 and 18 for respectively setting the powers of outputs from the modulators 13 and 14, a power setting controller 19 for controlling the power setting units 17 and 18, a synthesizer 20 for synthesizing outputs from the power setting units 17 and 18, an amplifier (AMP) 21 for amplifying an output from the synthesizer 20, and an antenna 22 connected to the AMP 21.

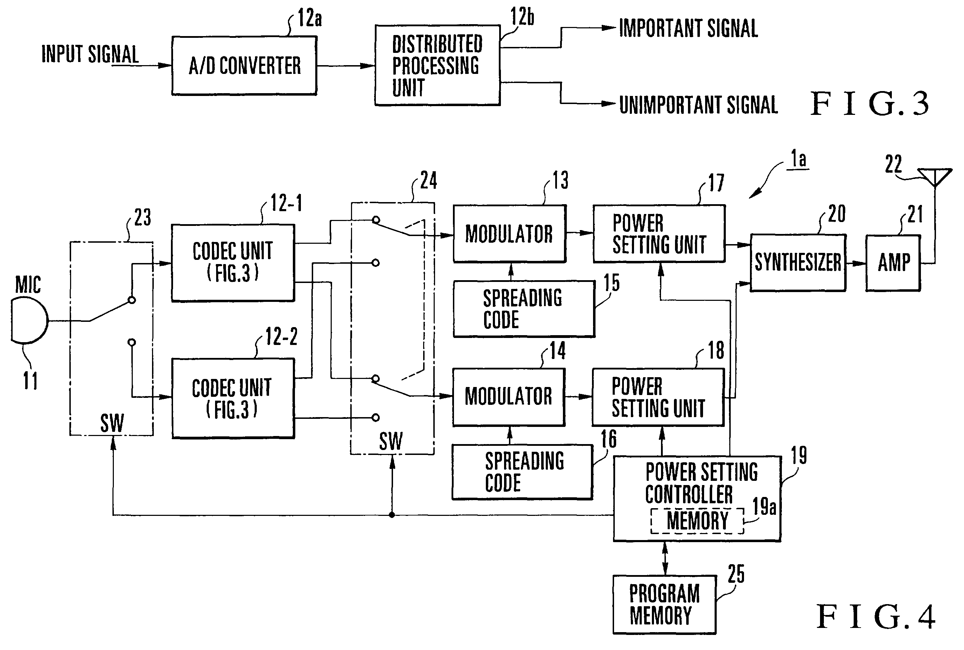

Fig. 3 shows the CODEC unit 12 shown in Fig. 2. As shown in Fig. 3, the CODEC unit 12 is constituted by an A/D (analog/digital) converter 12a, and a distributed processing unit 12b connected to the A/D converter 12a. The A/D converter 12a converts an input analog signal into a digital signal and outputs it to the distributed processing unit 12b. The distributed processing unit 12b separates the digital signal from the A/D converter 12a into important and unimportant signals and outputs them.

The distributed processing unit 12b separates the digital signal into important and unimportant signals in accordance with the CODEC method. For example, for a signal of one 8-bit block, the distributed processing unit 12b outputs upper 4 bits as an important signal and lower 4 bits as an unimportant signal. Alternatively, the distributed processing unit 12b outputs upper 2 bits as an important signal and lower 6 bits as an unimportant signal.

Operation of the mobile communication system having this arrangement will be explained.

In the mobile station 1, a speech signal from the MIC 11 is converted into a digital signal by the A/D converter 12a of the CODEC unit 12, and the digital signal is separated into and output as important and unimportant signals by the distributed processing unit 12b.

The important and unimportant signals from the CODEC unit 12 are subjected to spread spectrum modulation by the modulators 13 and 14 using spreading codes and carriers from the spreading code/carrier generators 15 and 16. The modulated important and unimportant signals are respectively input to the power setting units 17 and 18, which set powers corresponding to the importance for the modulated important and unimportant signals. Outputs from the power setting units 17 and 18 are synthesized by the synthesizer 20, amplified by the AMP 21, and transmitted from the antenna 22.

The important signal corresponds to upper bits of a power level, sound source signal, or air conduction filter constant obtained by analyzing the speech signal, whereas the unimportant signal corresponds to the lower bits.

In this case, the important signal is set by the power setting unit 17 to such level as to output 1 W from the antenna 22 under the control of the power setting controller 19. To the contrary, the unimportant signal is set by the power setting unit 18 to such level as to output 0.5 W from the antenna 22 under the control of the power setting controller 19. The two signals are synthesized by the synthesizer 20, and thus the antenna 22 outputs 1.5 W.

In the first embodiment, the powers of the important and unimportant signals are set to attain 1 : 0.5 as the output ratio of the antenna 22, and this ratio is determined by the characteristics of the CODEC unit 12. That is, the ratio is determined in accordance with the CODEC method of the CODEC unit 12. Since the characteristics of the CODEC unit 12 are known in advance, the determined ratio is used as a fixed value.

Fig. 4 shows a transmitter 1a of a mobile station 1 according to the second embodiment of the present invention. Note that a transmitter 2a of a base station 2 has the same arrangement as in Fig. 4.

As shown in Fig. 4, the transmitter 1a further comprises, in addition to the arrangement shown in Fig. 2, a plurality of CODEC units 12-1 and 12-2, a switch (SW) 23 for selectively switching an output from a MIC 11 between the CODEC units 12-1 and 12-2, a switch (SW) 24 for selectively switching a pair of important and unimportant signals from the CODEC units 12-1 and 12-2 between modulators 13 and 14, and a program memory 25.

Switching operation of the SWs 23 and 24 is controlled by a power setting controller 19. The same reference numerals as in Fig. 2 denote the same parts, and a description thereof will be omitted.

In Fig. 4, distribution of the transmission power from an antenna 22 is controlled to an optimum value for the system in accordance with the characteristics of the CODEC units 12-1 and 12-2. In this case, since a necessary power ratio between important information and unimportant information is not always constant, control information corresponding to the CODEC units 12-1 and 12-2 is stored in advance in a memory 19a of the power setting controller 19.

The power setting controller 19 sets optimum values in power setting units 17 and 18 every time the CODEC units 12-1 and 12-2 are switched by the SWs 23 and 24. The SWs 23 and 24 are switched in switching, e.g., a PDC (Personal Digital Cellular) between full and half rates.

Control by the power setting controller 19 is realized by executing a program stored in the program memory 25. As the program memory 25, a ROM (Read-Only Memory), RAM (Random Access Memory), memory card, or the like is used.

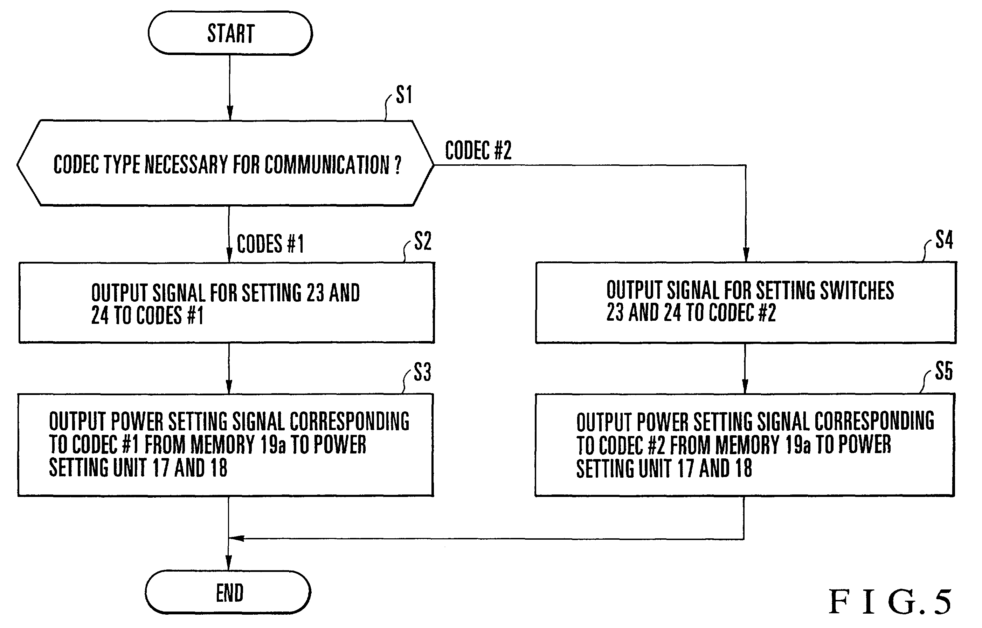

Power setting control by the power setting controller 19 will be explained with reference to the flow chart in Fig. 5.

The power setting controller 19 checks the CODEC type necessary for communication on the basis of information designating the CODEC type that is added to an input control signal (step S1). If the power setting controller 19 determines CODEC#1 (CODEC unit 12-1) as the CODEC type necessary for communication, it outputs to the SWs 23 and 24 a control signal for selecting an input to the CODEC unit 12-1 and an output from the CODEC unit 12-1 (step S2).

The power setting controller 19 reads out a power setting signal corresponding to the CODEC unit 12-1 from the memory 19a in which the above-described control information is stored in advance, and outputs the readout signal to the power setting units 17 and 18 (step S3).

If the power setting controller 19 determines CODEC#2 (CODEC unit 12-2) as the CODEC type necessary for communication, it outputs to the SWs 23 and 24 a control signal for selecting an input to the CODEC unit 12-2 and an output from the CODEC unit 12-2 (step S4). The power setting controller 19 reads out a power setting signal corresponding to the CODEC unit 12-2 from the memory 19a and outputs the readout signal to the power setting units 17 and 18 (step S5).

In this manner, in selecting the CODEC type necessary for communication, the transmission power can be set in accordance with an error rate necessary for the selected CODEC type. In the second embodiment, a large number of check bits, which are required to obtain a necessary error rate in the prior art, can be eliminated, and a necessary error rate can be attained by only adding a minimum number of check bits.

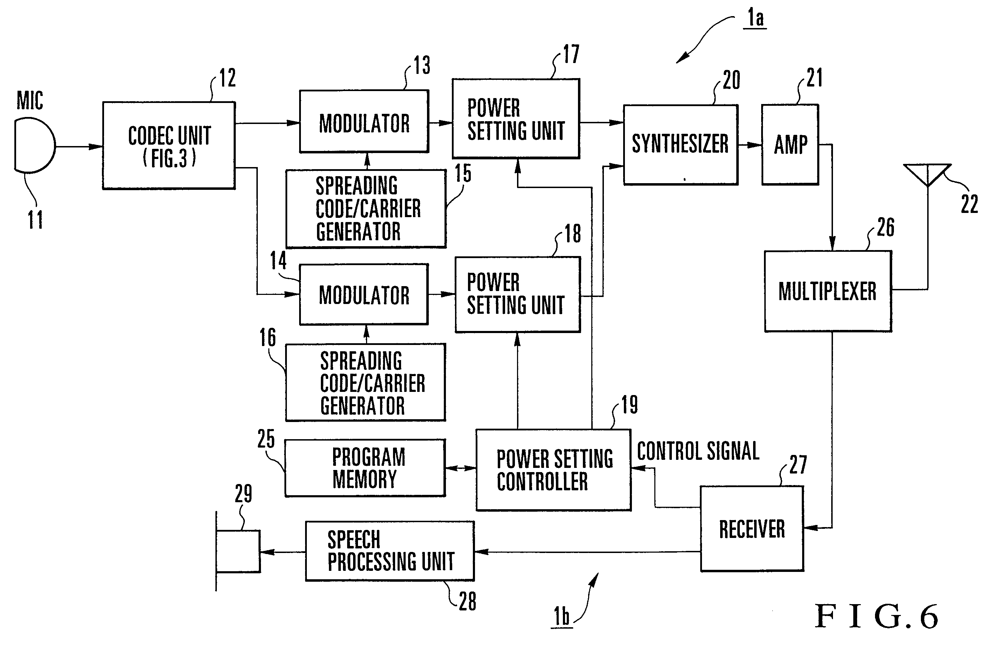

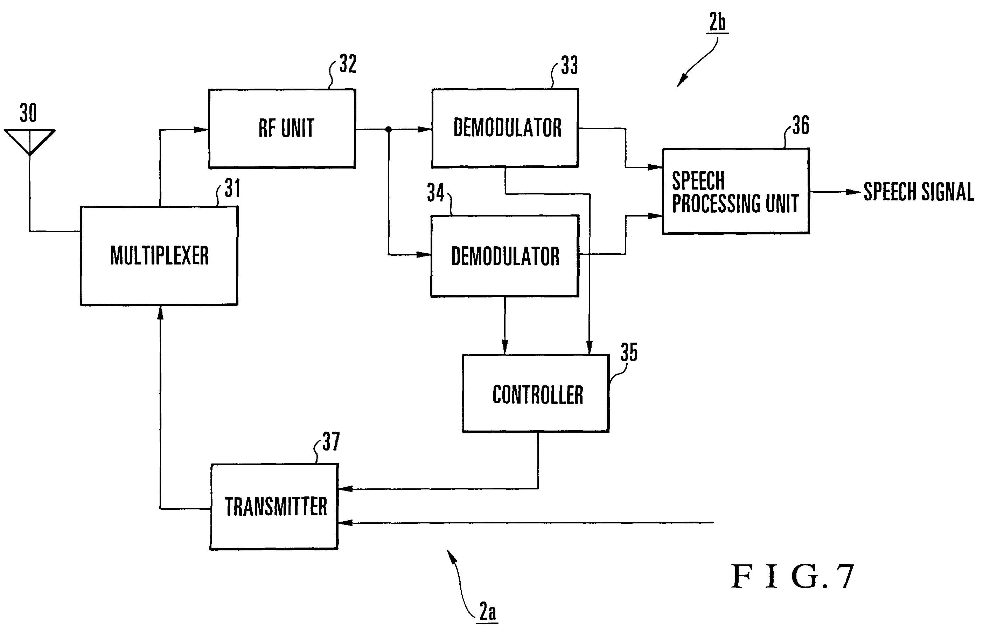

Figs. 6 and 7 show mobile and base stations 1 and 2 according to the third embodiment of the present invention. In the following description, the mobile station 1 serves as a transmission side, and the base station 2 serves as a reception side.

The mobile station 1 shown in Fig. 6 further comprises, in addition to the arrangement shown in Fig. 2, a multiplexer 26 formed from a hybrid circuit for performing 2-to-4-wire conversion between an antenna 22, transmitter 1a, and receiver 1b, a receiver 27 for receiving a received signal from the antenna 22 via the multiplexer 26, a speech processing unit 28 for performing speech processing for a signal output from the receiver 27, and a receiver 29 for converting a speech signal output from the speech processing unit 28 into an audible signal.

As shown in Fig. 7, the base station 2 comprises an antenna 30, a multiplexer 31 formed from a hybrid circuit for performing 2-to-4-wire conversion between the antenna 30, transmitter 2a, and receiver 2b, an RF unit 32 for amplifying a received signal from the antenna 30 via the transmitter 31, demodulators 33 and 34 for demodulating a signal output from the RF unit 32, a controller 35, a speech processing unit 36 for outputting a speech signal in accordance with the demodulated signals from the demodulators 33 and 34, and a transmitter 37 for outputting a transmission signal to the antenna 30 via the multiplexer 31.

The demodulators 33 and 34 separate a signal into important information and unimportant information in correspondence with the mobile station 1, demodulate them, and output the reception levels or error rates of the important information and unimportant information to the controller 35. The controller 35 transmits from the transmitter 37 to the mobile station 1 a control signal instructing the mobile station 1 to change the transmission power setting values of the two pieces of information in accordance with the signals indicating the reception levels or error rates from the demodulators 33 and 34.

Note that a demodulation circuit is not illustrated in Fig. 6 and a modulation circuit is not illustrated in Fig. 7.

In the base station 2, the demodulators 33 and 34 respectively perform error detection/correction to detect reception levels and error rates, and output the detection results to the controller 35. If the controller 35 recognizes the error rate to be low from the detection results from the demodulators 33 and 34, it instructs the transmitter 37 to output an up signal [(UP(+)] to the mobile station 1. If the controller 35 recognizes the error rate to be high, it instructs the transmitter 37 to output a down signal [DOWN(-)] to the mobile station 1.

Then, the transmitter 37 transmits control information made of the up or down signal from the controller 35, to the mobile station 1 via the multiplexer 31 and antenna 30.

In the mobile station 1, the control information from the base station 2 is received by the receiver 27 via the antenna 22 and multiplexer 26, and output to a power setting controller 19. The power setting controller 19 controls the power setting units 17 and 18 on the basis of the control information from the base station 2 that is received by the receiver 27.

According to the third embodiment, setting of the transmission power of each information is adaptively controlled in the mobile station 1. In other words, the transmission power of each information in the mobile station 1 is set to an optimum value in accordance with a transmission power setting signal for each information from the base station 2.

In mobile communication, the propagation state of radio waves greatly changes, and the power ratio between important information and unimportant information is not desirable to be always constant. For this reason, in the third embodiment, a predetermined power ratio is set as an initial value in accordance with the type of processing in a CODEC unit 12, and the transmission power from the mobile station 1 is reset to an optimum value in accordance with a transmission power setting signal for each information from the base station 2.

This transmission power setting signal may be a signal indicating a transmission power value from the base station 2 or a signal indicating power-up/down, and can be freely set in accordance with the system. Alternatively, the mobile station 1 may determine the transmission power on the basis of the level of a signal received by the base station 2.

The third embodiment has exemplified the case in which the mobile station 1 performs transmission and the base station 2 performs reception. However, the same operation is also done even when the base station 2 performs transmission and the mobile station 1 performs reception. At this time, the mobile station 1 reports a reception level or error rate to the base station 2, and the base station 2 sets its transmission power based on the information from the mobile station 1.

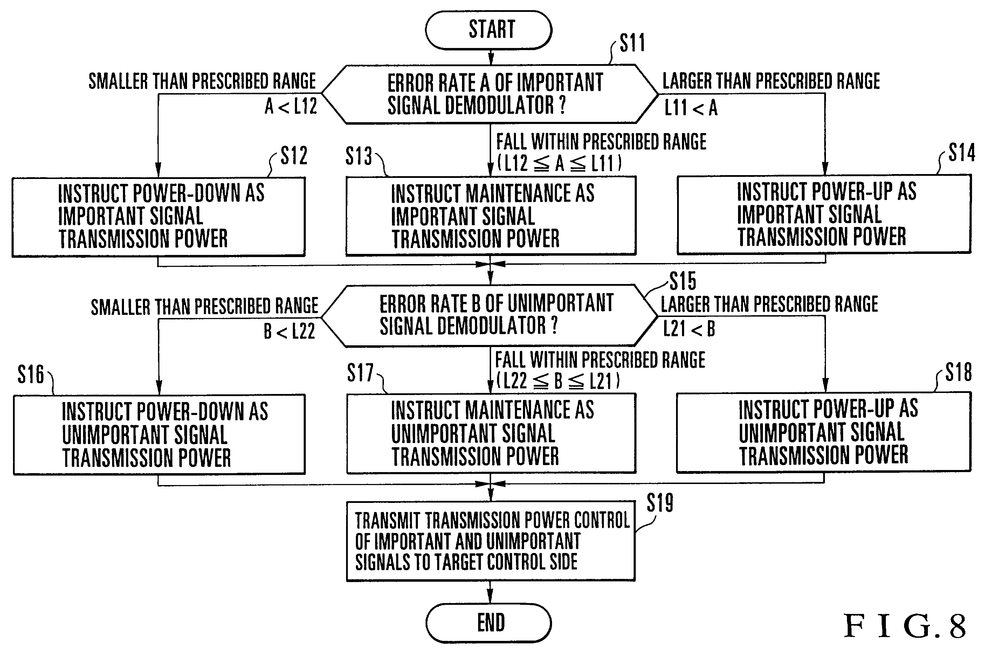

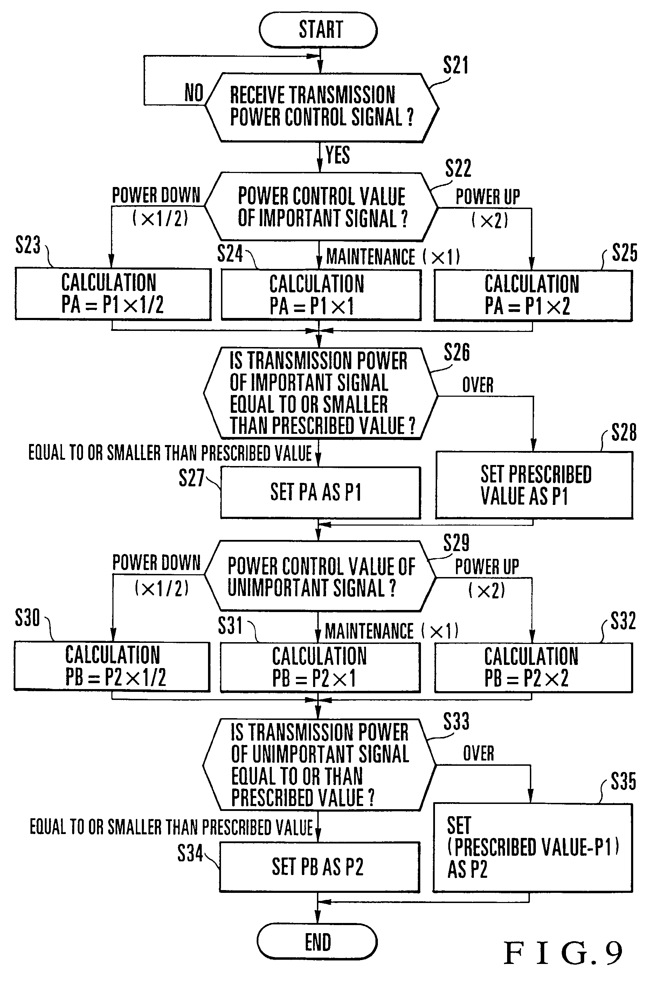

Transmission power control of the mobile communication system having this arrangement will be described with reference to Figs. 8 and 9.

In the base station 2, reference symbol A denotes the error rate of an important signal; L11 and L12, the upper and lower limits of the prescribed range of the important signal; B, the error rate of an unimportant signal; and L21 and L22, the upper and lower limits of the prescribed range of the unimportant signal.

In the mobile station 1, reference symbol P1 denotes the transmission power value of a current important value; PA, a power value calculated based on a control signal from the base station 2; P2, the transmission power value of a current unimportant value; and PB, a power value calculated based on the control signal from the base station 2.

The controller 35 determines whether the transmission power is increased/decreased or maintained on the basis of error rates detected by the demodulators 33 and 34, and transmits the determination results to the mobile station 1 using the transmitter 37.

More specifically, in Fig. 8, the controller 35 checks whether the error rate A of an important signal from the demodulator 33 falls within a prescribed range (L12 ≤ A ≤ L11) (step S11). If the error rate A of the important signal is smaller than the prescribed range (A < L12), the controller 35 instructs power-down as an important signal transmission power (step S12).

If the error rate A of the important signal falls within the prescribed range (L12 ≤ A ≤ L11) in step S11, the controller 35 instructs maintenance as an important signal transmission power (step S13). If the error rate A of the important signal is larger than the prescribed range (A > L11), the controller 35 instructs power-up as an important signal transmission power (step S14).

After determining control for the transmission power of the important signal, the controller 35 checks whether the error rate B of an unimportant signal from the demodulator 34 falls within a prescribed range (L22 ≤ B ≤ L21) (step S15). If the error rate B of the unimportant signal is smaller than the prescribed range (B < L22), the controller 35 instructs power-down as an unimportant signal transmission power (step S16).

If the error rate B of the unimportant signal falls within the prescribed range (L22 ≤ B ≤ L21) in step S15, the controller 35 instructs maintenance as an unimportant signal transmission power (step S17). If the error rate B of the unimportant signal is larger than the prescribed range (B > L21), the controller 35 instructs power-up as an unimportant signal transmission power (step S18). Then, the controller 35 controls the transmitter 37 to transmit to the mobile station 1 control information instructing control of the transmission powers of the important and unimportant signals (step S19).

In the third embodiment, transmission power control is instructed to the mobile station 1 in three, power-up, power-down, and maintenance modes. Instead, transmission power control may be instructed using the absolute value of the transmission power (e.g., setting to x W or the like).

On the other hand, the mobile station 1 waits for control information from the base station 2 to start controlling transmission power setting. That is, in Fig. 9, when the power setting controller 19 of the mobile station 1 receives the control information from the base station 2 (step S21), it checks whether the power control value of the important signal included in the received control information indicates any one of power-up, power-down, and maintenance (step S22).

If the control information indicates power-down of the power control value of the important signal, the power setting controller 19 calculates PA = P1 × 1/2 (step S23). If the control information indicates maintenance of the power control value of the important signal, the power setting controller 19 calculates PA = P1 × 1 (step S24). If the control information indicates power-up of the power control value of the important signal, the power setting controller 19 calculates PA = P1 × 2 (step S25).

The power setting controller 19 checks whether the calculation result PA is equal to or smaller than a prescribed value set in advance (step S26). If YES in step S26, the power setting controller 19 sets the current transmission power value P1 to the calculation result PA (step S27). If NO in step S26, the power setting controller 19 sets the current transmission power value P1 to the prescribed value (step S28).

Subsequently, the power setting controller 19 checks whether the power control value of the unimportant signal included in the control information indicates any one of power-up, power-down, and maintenance (step S29). If the control information indicates power-down of the power control value of the unimportant signal, the power setting controller 19 calculates PB = P2 × 1/2 (step S30). If the control information indicates maintenance of the power control value of the unimportant signal, the power setting controller 19 calculates PB = P2 × 1 (step S31). If the control information indicates power-up of the power control value of the unimportant signal, the power setting controller 19 calculates PB = P2 × 2 (step S32).

The power setting controller 19 checks whether the calculation result PB is equal to or smaller than a prescribed value set in advance (step S33). If YES in step S33, the power setting controller 19 sets the current transmission power value P2 to the calculation result PB (step S34). If NO in step S33, the power setting controller 19 sets the current transmission power value P2 to (the prescribed value - P1) (step S35).

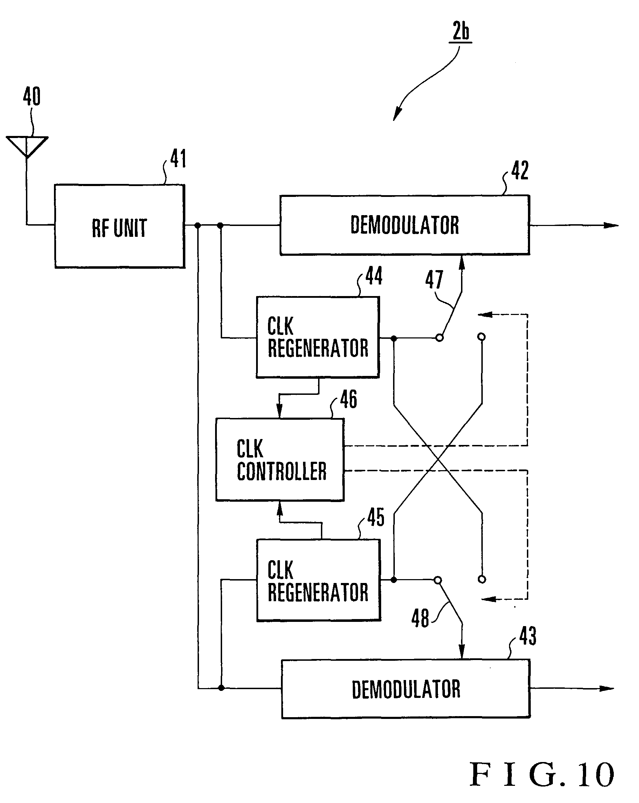

Fig. 10 shows a receiver 2b of a base station 2 according to the fourth embodiment of the present invention. Note that a receiver 1b of a mobile station 1 has the same arrangement as in Fig. 10.

The receiver 2b shown in Fig. 10 comprises an antenna 40, an RF unit 41 for amplifying a received signal from the antenna 40, demodulators 42 and 43 for demodulating an output from the RF unit 41, clock (CLK) regenerators 44 and 45 for regenerating clocks (CLKs) from the output from the RF unit 41, a clock (CLK) controller 46 for controlling the CLK regenerators 44 and 45, and switches 47 and 48 for respectively switching CLKs from the CLK regenerators 44 and 45 between the demodulators 42 and 43.

A signal received by the antenna 40 is divided into a desired frequency by the RF unit 41, and output to the demodulators 42 and 43 and CLK regenerators 44 and 45. The CLK regenerators 44 and 45 detect synchronization from the signal received via the RF unit 41, regenerate predetermined CLK signals, and output them to the switches 47 and 48.

The clock (CLK) controller 46 outputs a switching signal to the switches 47 and 48 in accordance with synchronization detection signals from the CLK regenerators 44 and 45. Then, one of the two CLKs from the CLK regenerators 44 and 45 that establishes synchronization is commonly supplied to the demodulators 42 and 43. If the demodulator 42 fails synchronization, it demodulates the signal divided by the RF unit 41 in accordance with the CLK from the CLK regenerator 45 that is supplied via the switch 47.

In the mobile station 1, data of important information and data of unimportant information are transmitted in synchronism with each other. On the base station 2 side, if either one of the demodulators 42 and 43 establishes synchronization, the CLK also synchronized in the other demodulator is employed to use stable synchronization. If two signals from the RF unit 41 are synthesized to extract a CLK from the synthesis signal, the CLK can be more stably regenerated.

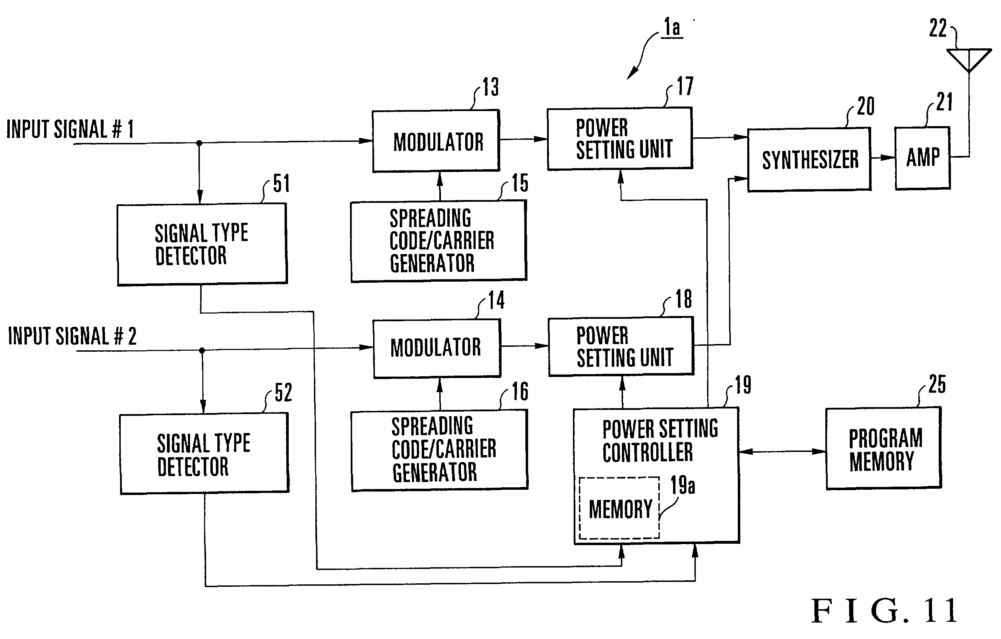

Fig. 11 shows a transmitter 1a of a mobile station 1 according to the fifth embodiment of the present invention.

As shown in Fig. 11, the transmitter 1a comprises modulators 13 and 14, spreading code/carrier generators 15 and 16, power setting units 17 and 18, a power setting controller 19, a synthesizer 20, an amplifier (AMP) 21, an antenna 22, a program memory 25, and signal type detectors 51 and 52.

In the transmitter 1a having this arrangement, input signals #1 and #2 are subjected to spread spectrum modulation by the modulators 13 and 14 using spreading codes and carriers from the spreading code/carrier generators 15 and 16. After that, the powers of the input signals #1 and #2 are set by the power setting units 17 and 18 in accordance with the control of the power setting controller 19. Outputs from the power setting units 17 and 18 are synthesized by the synthesizer 20, amplified by the AMP 21, and transmitted from the antenna 22.

The signal types (e.g., speech data or image data) of input signals #1 and #2 are respectively detected by the signal type detectors 51 and 52. The detection results of the signal type detectors 51 and 52 are sent to the power setting controller 19, which controls power setting in the power setting units 17 and 18 on the basis of the detection results of the signal type detectors 51 and 52.

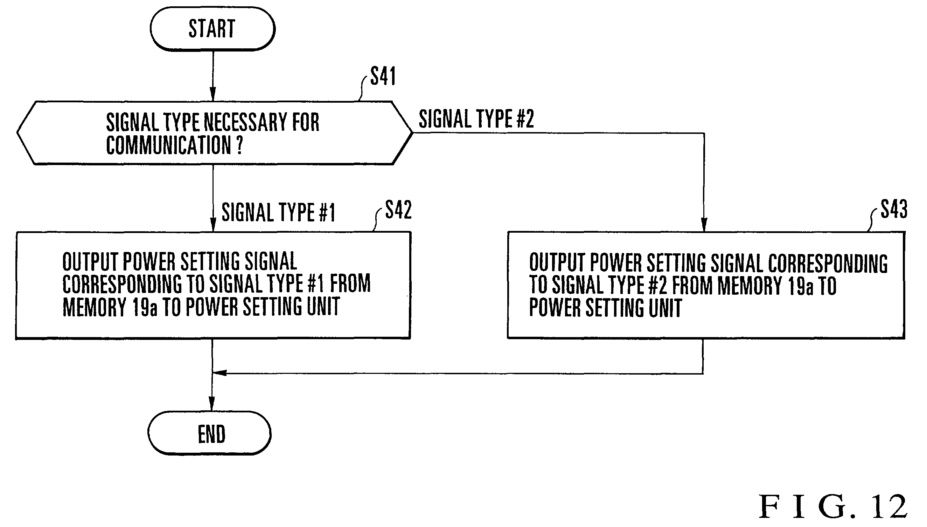

Operation of the transmitter 1a shown in Fig. 11 will be explained with reference to the flow chart shown in Fig. 12.

When the power setting controller 19 receives the types of input signals #1 and #2 from the signal type detectors 51 and 52, it determines a signal type important in communication (step S41). If the signal type necessary for communication is the signal type #1, the power setting controller 19 reads out a power setting signal corresponding to the signal type #1 from a memory 19a, and outputs the readout signal to the power setting units 17 and 18 (step S42).

If the signal type necessary for communication is the signal type #2, the power setting controller 19 reads out a power setting signal corresponding to the signal type #2 from the memory 19a, and outputs the readout signal to the power setting units 17 and 18 (step S43).

Hence, in selecting the type signal of signal necessary for communication, the transmission power can be set in accordance with an error rate necessary for the selected signal type. In the fifth embodiment, a large check bit, which is required to obtain a necessary error rate in the prior art, can be eliminated, and a necessary error rate can be attained by only adding a minimum check bit.

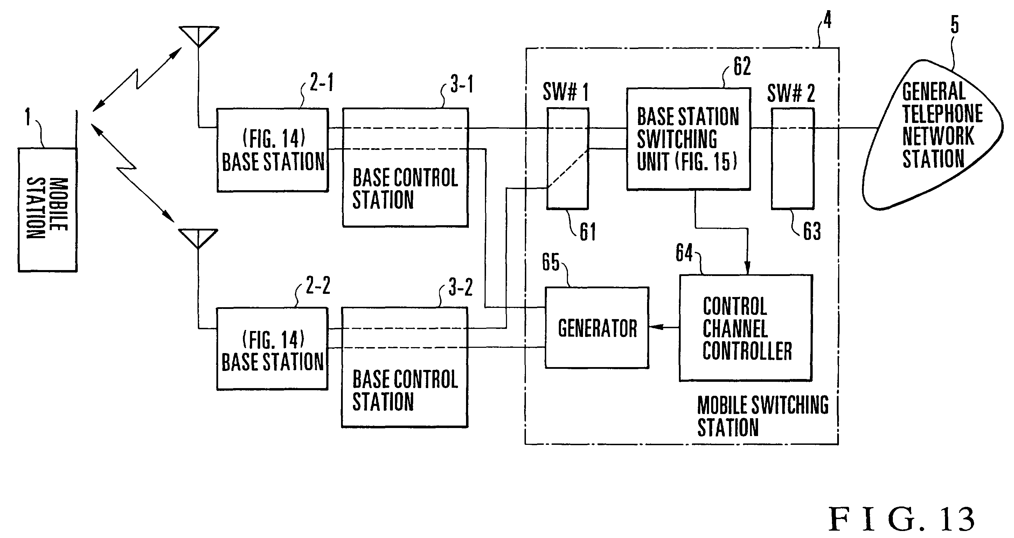

Fig. 13 shows the schematic arrangement of a mobile communication system according to the sixth embodiment of the present invention. As shown in Fig. 13, the mobile communication system is constituted by a mobile station 1, base stations 2-1 and 2-2, base control stations 3-1 and 3-2, a mobile switching station 4, and a general telephone network 5. The mobile switching station 4 comprises switches (SW#1 and SW#2) 61 and 63, a base station switching unit 62, a control channel controller 64, and a control channel signal generator 65.

The mobile station 1 is connected to the base stations 2-1 and 2-2 via radio waves, and connected from the base stations 2-1 and 2-2 to the general telephone network 5 via the base control stations 3-1 and 3-2 and mobile switching station 4. The mobile station 1 may adopt any one of the transmitter arrangements described in the first to fifth embodiments of the present invention.

The mobile station 1 synthesizes important and unimportant signals or signal types #1 and #2, and transmits the synthesis signal as a radio signal to the base stations 2-1 and 2-2. Upon reception of the radio signal from the mobile station 1, the base stations 2-1 and 2-2 transmit the received signal to the mobile switching station 4 via the base control stations 3-1 and 3-2.

In the mobile switching station 4, the base station switching unit 62 selects a signal free from any error every frame (block) of signals input from the base stations 2-1 and 2-2 via the switch 61, converts the selected signal into a speech signal, and transmits the speech signal to the general telephone network 5 via the switch 63.

In this case, even if one of signals from the base stations 2-1 and 2-2 has an error, the other signal can be used so long as this signal is free from any error, and the error rate can therefore be increased. If the increased error rate can ensure a prescribed error rate, normal speech communication can be realized. At this time, the base station switching unit 62 outputs a signal representing the increased error rate to the control channel controller 64.

The control channel controller 64 controls the control channel signal generator 65 to send the signal representing the increased error rate that is output from the base station switching unit 62, as a control channel signal to the base stations 2-1 and 2-2 via the base control stations 3-1 and 3-2. As a result, the increased error rate is fed back to the base stations 2-1 and 2-2. The base stations 2-1 and 2-2 control transmission power setting for a plurality of signals (important and unimportant signals, signal types #1 and #2, and the like) from the mobile station 1 on the basis of the increased error rate notified from the mobile switching station 4.

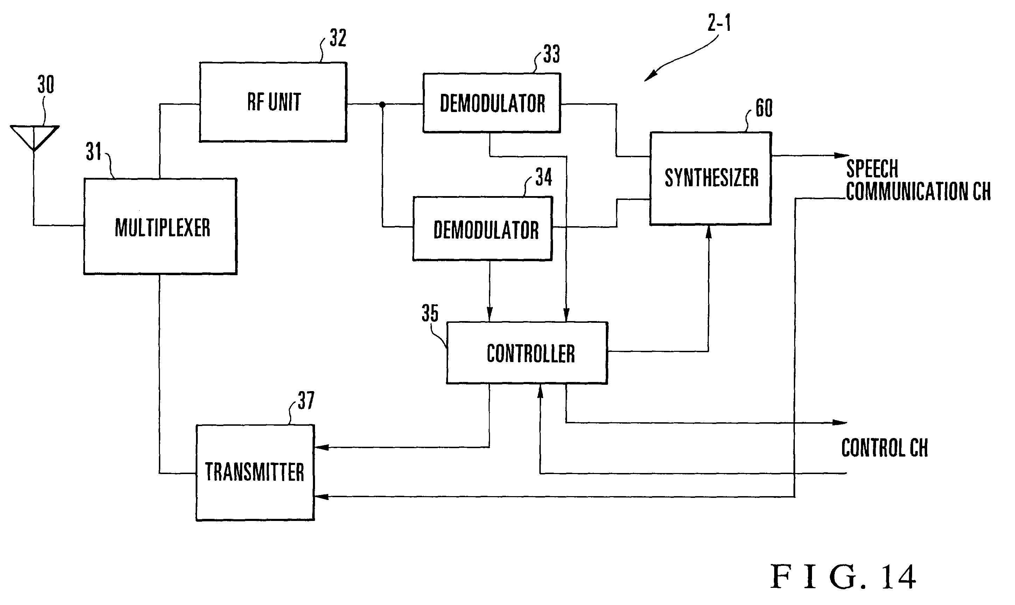

Fig. 14 shows the base station 2-1 shown in Fig. 13. Note that the base station 2-2 has the same arrangement as in Fig. 14. As shown in Fig. 14, the base station 2-1 or 2-2 comprises an antenna 30, a multiplexer 31, an RF unit 32, demodulators 33 and 34, a controller 35, a transmitter 37, and a synthesizer 60.

The demodulators 33 and 34 respectively perform error detection/correction for important information and unimportant information transmitted from the mobile station 1, and detect error rates to output them to the controller 35. The controller 35 adds a signal representing an error state to a signal (a multiplexed signal of important and unimportant signals, signal types #1 and #2, or the like) multiplexed by the synthesizer 60 on the basis of the detection results from the demodulators 33 and 34. For example, the controller 35 adds a signal representing an erroneous or normal state every 20-ms frame.

The controller 35 adds a synthesized error rate in units of a plurality of signals received from the mobile switching station 4 via the control channel, and error rates from the demodulators 33 and 34, and controls the transmission power of the mobile station 1 in units of a plurality of signals.

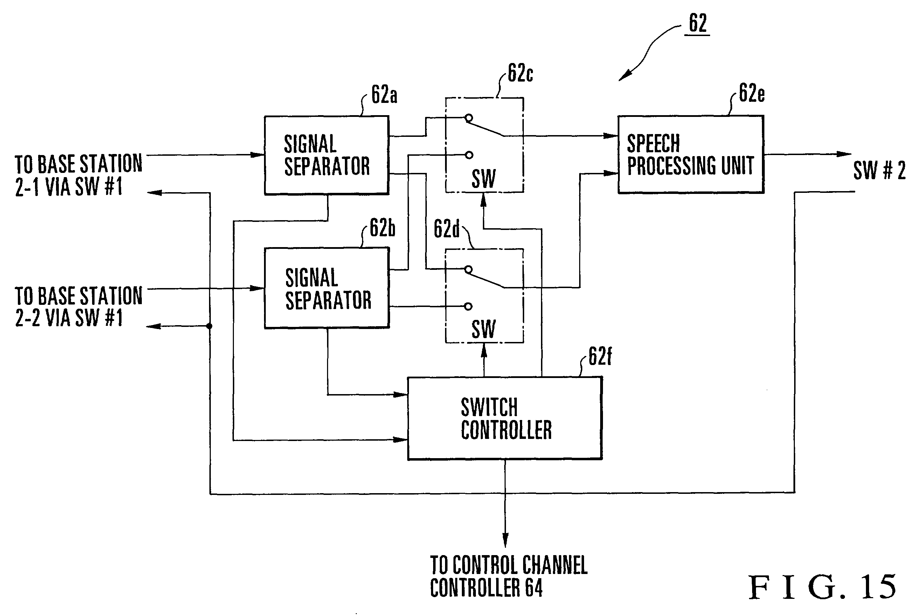

Fig. 15 shows the base station switching unit 62 shown in Fig. 13. As shown in Fig. 15, the base station switching unit 62 comprises signal separators 62a and 62b, switches (SWs) 62c and 62d, a speech processing unit 62e, and a switch controller 62f.

The signal separator 62a and 62b separate a plurality of signals demodulated by the base stations 2-1 and 2-2 into important and unimportant signals or signal types #1 and #2. The signal separators 62a and 62b multiplex and separate signals so as to transmit them via one channel in order to effectively use the line. However, if the line has a large capacity, a plurality of signals or error state signals may be separately transmitted.

The switch controller 62f determines the presence/absence of an error from the error state signal, and controls the switches 62c and 62d so as to select a signal free from any error. In this case, the switch controller 62f individually controls a plurality of signals.

The switch controller 62f outputs an error state signal obtained after synthesizing signals to the control channel controller 64. The control channel controller 64 notifies a necessary one of the base stations 2-1 and 2-2 via the control channel in the wire section of the error state signal.

As described above, when the two base stations 2-1 and 2-2 are simultaneously used to perform soft handover (no-hit switching of speech communication between base stations), the mobile switching station 4 can detect an error to further reduce the transmission power from the mobile station 1.

Since the transmission power can be changed in association with the reliability of a signal to be transmitted under the control of the power setting controller 19, the transmission power can be set in accordance with a necessary error rate. A large check bit, which is required to obtain a necessary error rate in the prior art, can be eliminated, and a necessary error rate can be attained by only adding a minimum check bit.

Accordingly, the transmission power can be optimized. Since no extra transmission power is used, interference with another radio station can be prevented to effectively use the frequency. The error rate can also be set in accordance with the characteristics of the CODEC units 12-1 and 12-2 upon switching the CODEC units 12-1 and 12-2.

By setting the transmission power of a corresponding signal in accordance with a power setting signal or power-up/down instruction from the receiver side, the error rate can be optimized during communication, which always enables communication in the optimum state.

The above embodiments are applicable to, e.g., a mobile communication system using CDMA (Code Division Multiple Access) but also to an analog signal. These embodiments can be applied to an analog signal if the spreading code of CDMA is regarded as a frequency division channel.

In TDMA (Time Division Multiple Access), the embodiments can be applied using the burst unit, the time slot divided into sub-time slots, or two or more time slots.

As has been described above, according to the present invention, in the radio transmission system for transmitting/receiving information between the transmitter and receiver by radio waves, when a plurality of pieces of information are to be transmitted from the transmitter, they are transmitted with different transmission powers. This allows setting a necessary error rate and effectively using the frequency.

**Claims**

1. A radio transmission system characterized by transmitting/receiving information between a transmitter (1a, 2a) and a receiver (1b, 2b) via a radio channel,

   said transmitter comprising:
   a plurality of power setting means (17, 18) for individually variably setting transmission powers of a plurality of pieces of information to be transmitted to said receiver to predetermined values; and
   transmission means (21, 22) for simultaneously transmitting the plurality of pieces of information having the set transmission powers to said receiver.

2. A system according to claim 1, wherein said system further comprises synthesis means (20) for multiplexing and synthesizing the plurality of pieces of information having the set transmission powers, and

   said transmission means transmits a multiplexed signal output from said synthesis means to said receiver.

3. A system according to claim 1, wherein said transmitter further comprises separation means (12) for separating input information from one information source into a plurality of pieces of information, and

   said power setting means respectively set transmission powers of the plurality of pieces of information from said separation means in accordance with reliability of the information.

4. A system according to claim 3, wherein said separation means comprises a CODEC unit for separating input information into important and unimportant signals depending on a CODEC method.

5. A system according to claim 1, wherein said transmitter further comprises a plurality of detection means (51, 52) for detecting the type of information in correspondence with a plurality of pieces of input information, and

   said power setting means respectively set transmission powers of the pieces of input information on the basis of detection results of said detection means.

6. A system according to claim 1, wherein said power setting means respectively set transmission powers of a plurality of pieces of input information on the basis of reliabilities of the pieces of input information.

7. A system according to claim 1, wherein said receiver comprises information generation means (37) for generating control information on the basis of information received from said transmitter, and

   said power setting means set transmission powers of a plurality of pieces of information on the basis of a control signal from said receiver.

8. A system according to claim 7, wherein said receiver further comprises:

   separation means (32) for separating information received from said transmitter into a plurality of pieces of information in accordance with the type of signal; and
   a plurality of detection means (51, 52) for detecting reception levels and error rates of the plurality of pieces of information output from said separation means and outputting the reception levels and error rates to said transmission means,
   said information generation means generates a control signal on the basis of one of the reception levels and error rates from said detection means, and

said power setting means respectively set transmission powers of a plurality of pieces of information on the basis of at least one of the reception levels and error rates when said transmitter receives the control signal from said receiver.

9. A system according to claim 7, wherein said power setting means set transmission powers of a plurality of pieces of information on the basis of at least one of a control signal indicating a power setting value from said receiver and a control value instructing increasing/decreasing the transmission power.

10. A system according to claim 1, wherein a plurality of pieces of information transmitted from said transmitter to said receiver are synchronized with each other, and

said receiver comprises:
a plurality of signal synchronization means (44, 45) for respectively synchronizing signals of the plurality of pieces of information transmitted from said transmitter; and
a plurality of demodulation means (42, 43) for respectively demodulating the plurality of pieces of information in accordance with a common synchronized signal when either one of said signal synchronization means establishes synchronization.

11. A radio transmission method of transmitting/receiving information between a transmitter (1a, 2a) and a receiver (1b, 2b) via a radio channel, characterized by comprising the steps of:

individually variably setting transmission powers of a plurality of pieces of information to be transmitted to predetermined values; and
simultaneously transmitting the pieces of information having the set transmission powers to said receiver.

12. A method according to claim 11, wherein the variable setting step comprises the steps of:

dividing information from one information source into a plurality of pieces of information; and
setting transmission powers of the plurality of pieces of divided information in accordance with reliability of the information.

13. A method according to claim 12, wherein the division step comprises the step of separating information into important and unimportant signals depending on a CODEC method.

14. A method according to claim 11, wherein the method further comprises the step of detecting the types of pieces of information, and

the variable setting step comprises the step of setting transmission powers of the pieces of information on the basis of the detected types of pieces of information.

15. A method according to claim 11, wherein the variable setting step further comprises the step of setting transmission powers of a plurality of pieces of information in accordance with reliability of the information.

16. A method according to claim 11, wherein the method further comprises the step of generating control information in said receiver on the basis of information received from said transmitter, and

the variable setting step comprises the step of setting transmission powers of a plurality of pieces of information in accordance with a control signal from said receiver.

17. A method according to claim 16, further comprising the steps of:

detecting a reception level and error rate of information in said receiver and outputting the reception level and error rate to said transmitter; and
setting transmission powers of a plurality of pieces of information in said transmitter on the basis of at least one of the transmitted reception level and error rate.

18. A method according to claim 16, wherein the variable setting step comprises the step of setting transmission powers of a plurality of pieces of information in accordance with at least one of a control signal indicating a power setting value from said receiver and a control value instructing increasing/decreasing the transmission power.

19. A method according to claim 11, further comprising the steps of:

transmitting a plurality of pieces of information synchronized with each other to said receiver in said transmitter;
individually synchronizing the plurality of pieces of information transmitted from said transmitter in said receiver; and
demodulating the plurality of pieces of information on the basis of synchronized signals of the pieces of synchronized information.

20. A recording medium for recording a radio transmission control program for transmitting/receiving information between a transmitter (1a, 2a) and a receiver (1b, 2b) via a radio channel, characterized by comprising:

    a procedure of individually variably setting transmission powers of a plurality of pieces of information to be transmitted to predetermined values; and
    a procedure of simultaneously transmitting the pieces of information having the set transmission powers to said receiver.

**F I G . 1**

MOBILE STATION 1 — TRANSMITTER 1a / RECEIVER 1b → antenna → BASE STATION 2 (TRANSMITTER 2a / RECEIVER 2b) → BASE CONTROL STATION 3 → MOBILE SWITCHING STATION 4 → GENERAL TELEPHONE NETWORK 5

EP 0 959 581 A2

EP 0 959 581 A2

MIC — 11

CODEC UNIT (FIG.3) — 12

MODULATOR — 13

SPREADING CODE/CARRIER GENERATOR — 15

POWER SETTING UNIT — 17

1a

SYNTHESIZER — 20

AMP — 21

22

MODULATOR — 14

SPREADING CODE/CARRIER GENERATOR — 16

POWER SETTING UNIT — 18

POWER SETTING CONTROLLER — 19

F I G. 2

INPUT SIGNAL → A/D CONVERTER (12a) → DISTRIBUTED PROCESSING UNIT (12b) → IMPORTANT SIGNAL

→ UNIMPORTANT SIGNAL

F I G. 3

MIC (11) — SW (23) → CODEC UNIT (FIG.3) (12-1), CODEC UNIT (FIG.3) (12-2)

SW (24)

MODULATOR (13) — SPREADING CODE (15)

MODULATOR (14) — SPREADING CODE (16)

POWER SETTING UNIT (17)

POWER SETTING UNIT (18)

POWER SETTING CONTROLLER (19) — MEMORY (19a)

SYNTHESIZER (20) — AMP (21) → (22)

1a

PROGRAM MEMORY (25)

F I G. 4

EP 0 959 581 A2

13

EP 0 959 581 A2

```
                    ┌─────────────┐
                    │    START    │
                    └──────┬──────┘
                           │
                           ▼                    S1
     ┌─────────────────────────────────────────┐
    <   CODEC TYPE NECESSARY FOR COMMUNICATION ?  >────── CODEC #2 ───────┐
     └─────────────────────┬───────────────────┘                          │
                           │ CODES #1                                      │
                           ▼                    S2                         ▼                    S4
     ┌─────────────────────────────────┐          ┌─────────────────────────────────┐
     │ OUTPUT SIGNAL FOR SETTING 23 AND│          │ OUTPUT SIGNAL FOR SETTING SWITCHES│
     │ 24 TO CODES #1                  │          │ 23 AND 24 TO CODEC #2           │
     └─────────────────┬───────────────┘          └─────────────────┬───────────────┘
                       ▼                    S3                       ▼                    S5
     ┌─────────────────────────────────┐          ┌─────────────────────────────────┐
     │ OUTPUT POWER SETTING SIGNAL     │          │ OUTPUT POWER SETTING SIGNAL     │
     │ CORRESPONDING TO CODEC #1 FROM  │          │ CORRESPONDING TO CODEC #2 FROM  │
     │ MEMORY 19a TO POWER SETTING     │          │ MEMORY 19a TO POWER SETTING     │
     │ UNIT 17 AND 18                  │          │ UNIT 17 AND 18                  │
     └─────────────────┬───────────────┘          └─────────────────┬───────────────┘
                       │◄───────────────────────────────────────────┘
                       ▼
                 ┌─────────────┐
                 │     END     │
                 └─────────────┘
```

F I G . 5

FIG.6

EP 0 959 581 A2

F I G. 7

EP 0 959 581 A2

START

S11

SMALLER THAN PRESCRIBED RANGE
$A < L12$

ERROR RATE A OF IMPORTANT
SIGNAL DEMODULATOR ?

LARGER THAN PRESCRIBED RANGE
$L11 < A$

FALL WITHIN PRESCRIBED RANGE
$(L12 \leqq A \leqq L11)$

S12

INSTRUCT POWER-DOWN AS
IMPORTANT SIGNAL
TRANSMISSION POWER

S13

INSTRUCT MAINTENANCE AS
IMPORTANT SIGNAL
TRANSMISSION POWER

S14

INSTRUCT POWER-UP AS
IMPORTANT SIGNAL
TRANSMISSION POWER

S15

SMALLER THAN PRESCRIBED RANGE
$B < L22$

ERROR RATE B OF UNIMPORTANT
SIGNAL DEMODULATOR ?

LARGER THAN PRESCRIBED RANGE
$L21 < B$

FALL WITHIN PRESCRIBED RANGE
$(L22 \leqq B \leqq L21)$

S16

INSTRUCT POWER-DOWN AS
UNIMPORTANT SIGNAL
TRANSMISSION POWER

S17

INSTRUCT MAINTENANCE AS
UNIMPORTANT SIGNAL
TRANSMISSION POWER

S18

INSTRUCT POWER-UP AS
UNIMPORTANT SIGNAL
TRANSMISSION POWER

S19

TRANSMIT TRANSMISSION POWER CONTROL
OF IMPORTANT AND UNIMPORTANT
SIGNALS TO TARGET CONTROL SIDE

END

F I G . 8

START

RECEIVE TRANSMISSION
POWER CONTROL SIGNAL ?  S21

NO

YES

POWER CONTROL VALUE
OF IMPORTANT SIGNAL ?  S22

POWER DOWN
(×1/2)

POWER UP
(×2)

MAINTENANCE (×1)

CALCULATION
PA = P1×1/2  S23

CALCULATION
PA = P1×1  S24

CALCULATION
PA = P1×2  S25

IS TRANSMISSION POWER
OF IMPORTANT SIGNAL
EQUAL TO OR SMALLER
THAN PRESCRIBED VALUE ?  S26

OVER

EQUAL TO OR SMALLER THAN PRESCRIBED VALUE

SET PA AS P1  S27

SET PRESCRIBED
VALUE AS P1  S28

POWER CONTROL VALUE OF
UNIMPORTANT SIGNAL ?  S29

POWER DOWN
(×1/2)

POWER UP
(×2)

MAINTENANCE (×1)

CALCULATION
PB = P2×1/2  S30

CALCULATION
PB = P2×1  S31

CALCULATION
PB = P2×2  S32

IS TRANSMISSION POWER
OF UNIMPORTANT SIGNAL
EQUAL TO OR THAN
PRESCRIBED VALUE ?  S33

OVER

EQUAL TO OR SMALLER THAN PRESCRIBED VALUE

SET PB AS P2  S34

SET
(PRESCRIBED VALUE-P1)
AS P2  S35

END

F I G. 9

F I G. 10

FIG. 11

EP 0 959 581 A2

START

S41

SIGNAL TYPE NECESSARY FOR
COMMUNICATION ?

SIGNAL TYPE #2

SIGNAL TYPE #1

S42

OUTPUT POWER SETTING SIGNAL
CORRESPONDING TO SIGNAL TYPE #1 FROM
MEMORY 19a TO POWER SETTING UNIT

S43

OUTPUT POWER SETTING SIGNAL CORRESPONDING
TO SIGNAL TYPE #2 FROM MEMORY 19a TO
POWER SETTING UNIT

END

F I G. 12

EP 0 959 581 A2

FIG. 13

F I G. 14

EP 0 959 581 A2

FIG. 15

EP 0 959 581 A2